# EUROPÄISCHE PATENTSCHRIFT

(11) **EP 4 144 809 B1**
(45) Veröffentlichungstag und Bekanntmachung des Hinweises auf die Patenterteilung: **18.09.2024**
(21) Anmeldenummer: 22183578.8
(22) Anmeldetag: 07.07.2022
(51) Int. Cl.: C09J 7/29

(54) **DEHNUNGSAUSGLEICHSELEMENT ZUM VERBINDEN VON DACHRINNENSTÜCKEN**
EXPANSION COMPENSATING ELEMENT FOR JOINING GUTTER SECTIONS
ÉLÉMENT DE COMPENSATION DE DILATATION PERMETTANT DE RELIER LES PARTIES DE GOUTTIÈRE

(30) Priorität: 01.09.2021 AT 506972021
(43) Veröffentlichungstag der Anmeldung: 08.03.2023
(73) Patentinhaber: Hable, Peter, 4053 Haid (AT)
(72) Erfinder: Hable, Peter, 4053 Haid (AT)
(74) Vertreter: Hübscher & Partner Patentanwälte GmbH

(56) Entgegenhaltungen:
- EP-A1- 2 522 791
- CN-A- 110 964 448
- CN-U- 211 734 250
- GB-A- 2 287 046

## Beschreibung

Die Erfindung bezieht sich auf eine Vorrichtung umfassend Dachrinnenstücke und ein Dehnungsausgleichselement mit einem eine Klebeschicht aufweisenden Basisstreifen aus EPDM-Kautschuk, wobei das Dehnungsausgleichselement über einen Stoß- bzw. Überlappungsbereich zwischen zwei Dachrinnenstücken geklebt ist.

Dehnungsausgleichselemente werden üblicherweise zum Verbinden und Abdichten von stoßseitig bzw. überlappend miteinander verbundenen Dachrinnenstücken eingesetzt, um temperaturbedingte Längenänderungen der Dachrinnen auszugleichen und somit einer Beschädigung vorzubeugen. Aus der DE102015220701A1 ist hierzu ein Dehnungsausgleichselement mit einem Basisstreifen bekannt. Der Basisstreifen weist auf zwei entgegengesetzten Rändern seiner dachrinnenzugewandten Seite je einen Klebeschichtstreifen auf, wobei zwischen den zwei Klebeschichtstreifen ein klebeschichtfreier faltenbalgartiger Dehnungsabschnitt verläuft. Das Dehnungsausgleichelement wird demnach so über den Stoß zweier Dachrinnenstücke gelegt, dass ein erster randseitiger Klebeschichtstreifen mit einem ersten Dachrinnenstück verklebt ist und dass der bezüglich dem Dehnungsabschnitt gegenüberliegende zweite Klebeschichtstreifen mit einem zweiten Dachrinnenstück verklebt ist, sodass zur Längsausdehnungskompensation der Stoßbereich zwischen den Dachrinnen vom Dehnungsabschnitt überdeckt ist. Dies birgt jedoch den Nachteil, dass das Dehnungsausgleichelement die stoßseitig miteinander verbundenen Dachrinnen nur unzureichend abdichtet, wodurch es zu Leckagen kommen kann. Darüber hinaus sind die aus DE102015220701A1 bekannten Dehnungsausgleichselemente verhältnismäßig aufwendig zu produzieren und verschlechtern aufgrund der faltenbalgartigen Ausgestaltung das Abfließverhalten von Dachrinnen.

Der Erfindung liegt somit die Aufgabe zugrunde, eine Vorrichtung der eingangs geschilderten Art vorzuschlagen, die trotz einfacher Produktionsbedingungen eine leckagenfreie Abdichtung von miteinander verbundenen Dachrinnen ermöglicht, ohne dabei die Funktion der Dachrinnen, sowie die Funktion des Dehnungsausgleichs zu beeinträchtigen.

Die Erfindung löst die gestellte Aufgabe dadurch, dass die Klebeschicht vollflächig unter Zwischenlage einer Zwischenschicht aus Butylkautschuk auf einer Seite des Basisstreifens angeordnet ist. Zufolge der erfindungsgemäßen Maßnahmen wird auch der leckagenempfindliche Stoß- Überlappungsbereich zwischen zwei Dachrinnen vom Dehnungselement, insbesondere von dessen Klebeschicht, versiegelt. Durch das erfindungsgemäße Vorsehen des Butylkautschuks zwischen der Klebeschicht und dem EPDM- (Ethylen-Propylen-Dien-) Kautschuk-Basisstreifen wird ein ausreichender Halt der Klebeschicht auf dem Dehnungsausgleichselement und damit eine ausreichend starke Verbindung zwischen den Dachrinnen begünstigt. Dennoch hat sich überraschenderweise herausgestellt, dass sich die Klebeschicht bei Überschreitung einer bestimmten Längsausdehnung der Dachrinnenstücke im Stoß- bzw. Überlappungsbereich vom Butylkautschuk ablöst und die erforderliche Längsausdehnung eingeht, ohne dabei die Versiegelung des Stoß- bzw. Überlappungsbereichs aufzubrechen. Die Längsausdehnung wird demnach vorwiegend durch das Abschälen der Klebeschicht vom Butylkautschuk erzielt, während der Basisstreifen aus EPDM-Kautschuk und die Zwischenlage aus Butylkautschuk nur eine geringere Längsausdehnung erfahren. Das erfindungsgemäße Dehnungsausgleichselement umfasst demnach wenigstens drei Schichten. Der Basisstreifen ist aus UV-beständigem EPDM-Kautschuk gefertigt und weist eine Schicht aus Butylkautschuk auf. Aufgrund der guten Hafteigenschaften des Butylkautschuks kann auf diesen eine Klebeschicht aufgetragen werden, die sich ab einer vorgebbaren Längsausdehnung vom Butylkautschuk löst bzw. abschält. Die Klebeschicht ist vollflächig unter Zwischenlage einer Zwischenschicht aus Butylkautschuk auf der dachrinnenzugewandten Seite des Basisstreifens angeordnet. Im Zusammenhang der Erfindung ist unter vollflächig zu verstehen, dass das Dehnungsausgleichselement im Wesentlichen keine klebeschichtfreien Flächen auf seiner dachrinnenzugewandten Seite aufweist. Freilich können sich produktionsbedingt randseitig klebeschichtfreie Randflächen ergeben. Die Fläche der Klebeschicht kann wenigstens 80%, bevorzugt wenigstens 90%, besonders bevorzugt wenigsten 98% der Fläche des Basisstreifens betragen. Selbiges gilt für den Butylkautschuk, welcher ja als Zwischenschicht zwischen Klebeschicht und Basisstreifen vorgesehen ist. Auf diese Weise ist das Dehnungsausgleichselement im Wesentlichen über den gesamten Querschnitt gleich aufgebaut, wodurch eine Lagerung als Dehnungsausgleichsbandrolle und eine einfache Konfektionierung möglich ist. Eine Applikation des Dehnungsausgleichselements kann somit auf einfache Art und Weise erfolgen, in dem das Dehnungsausgleichselement über den Stoß- bzw. Überlappungsbereich zwischen zwei Dachrinnenstücken geklebt wird. Es muss wohl nicht weiter erwähnt werden, dass das Dehnungsausgleichselement auch zum Verbinden und Abdichten anderer typischer im Spenglerbereich eingesetzten Bauteile geeignet ist, bei denen das Problem einer temperaturbedingten Längsausdehnung auftritt.

Damit das Ausschälen der Klebeschicht vom Dehnungsausgleichselement nur zwischen Klebeschicht und Zwischenschicht stattfindet und somit die vom EPDM-Kautschuk und Butylkautschuk erzeugte Stabilität der Verbindung zwischen zwei Dachrinnen auch bei starker Längsausdehnung aufrecht bleibt, wird vorgeschlagen, dass der Butylkautschuk auf den Basisstreifen aus EPDM-Kautschuk aufvulkanisiert ist. Auf diese Weise gehen der Butylkautschuk und der EPDM-Kautschuk eine unlösbare Verbindung ein, sodass es bei Längsausdehnung der Dachrinnenstücke nur zu einem Abschälen der Klebeschicht von der Zwischenschicht aus Butylkautschuk kommt.

Um auch bei starken Temperaturschwankungen die sich ergebenden Längsausdehnungen von Dachrinnenstücken oder dergleichen auszugleichen, kann die Klebeschicht ein elastischer Klebstoff sein. Als geeignete Klebeschicht hat sich ein Polyacrylatkleber herausgestellt.

Insbesondere ein Polyacrylatkleber umfassend 85 - 90 Gew% Polyacrylat und 10 - 15 Gew% Harze eignet sich als Klebeschicht. Ein Polyacrylatkleber mit diesen Eigenschaften weist nämlich bei typisch zu erwartenden Temperaturen von -20°C bis 80°C der Dachrinnenelemente eine starke Hafteigenschaft auf, ohne dabei auszuhärten oder spröde zu werden. Durch das so erzeugte dauerhafte elastische Verhalten können besonders große Längsausdehnungen durch die Klebeschicht aufgenommen werden.

Eine ausreichend sichere Verbindung zwischen zwei Dachrinnenstücken, ohne dabei das Abfließverhalten dieser in negativer Weise zu beeinflussen, ergibt sich, wenn, die Klebeschicht eine Dicke von 0,7 mm bis 2 mm, insbesondere von 1 mm bis 1,5 mm, aufweist. Dadurch wird auch bei großen Längsausdehnungen genügend Klebeschicht zum Versiegeln der Stoß- bzw. Überlappungsbereiche bereitgestellt.

Um das Dehnungsausgleichselement ausreichend gegen Zugbelastungen zu schützen, können der Basisstreifen und die Zwischenschicht gemeinsam eine Dicke von 0,5 mm bis 1,5 mm, insbesondere von 0,8 mm bis 1 mm, aufweisen. Trotz hoher Stabilität ergibt sich dennoch ein ausreichend schmales Dehnungsausgleichselement, sodass Wasser ungehindert in den über die Dehnungsausgleichselemente verbundenen Dachrinnenstücke abfließen kann.

Um zu verhindern, dass es bei übermäßiger Längsausdehnung der Dachrinnenstücke zu einem zu starken Ablösen der Klebeschicht kommt, kann diese von einer parallel zur Klebeschicht verlaufenden Strukturschicht in zwei Klebeschichthälften geteilt sein. Einerseits werden dadurch die Klebeschichthälften mechanisch voneinander entkoppelt, sodass die die Dachrinnenstücke kontaktierende Klebeschicht die Längsausdehnung ausgleichen kann und die Klebeschichthälfte zwischen Butylkautschuk und Strukturschicht, weitgehend von der Längsausdehnung entkoppelt, für eine sichere Haftung des Butylkautschuks an der Strukturschicht sorgt, andererseits wird durch die Strukturschicht die Stabilität der Klebeschicht erhöht, sodass unabhängig von den Außentemperaturen ausreichend hohe Zugkräfte aufgenommen werden können, ohne die Klebeschicht zu beschädigen. Die Strukturschicht kann beispielsweise ein PP-Strukturgewebe sein.

In der Zeichnung ist der Erfindungsgegenstand beispielsweise dargestellt. Es zeigen
- Fig. 1: zwei mit dem erfindungsgemäßen Dehnungsausgleichselement verbundene Dachrinnenstücke in Schrägansicht,
- Fig. 2: einen Schnitt entlang der Linie II-II der Fig. 1 in vergrößertem Maßstab und
- Fig. 3: eine vergrößerte schematische Darstellung des in den Figs. 1 und 2 gezeigten Dehnungsausgleichselements.

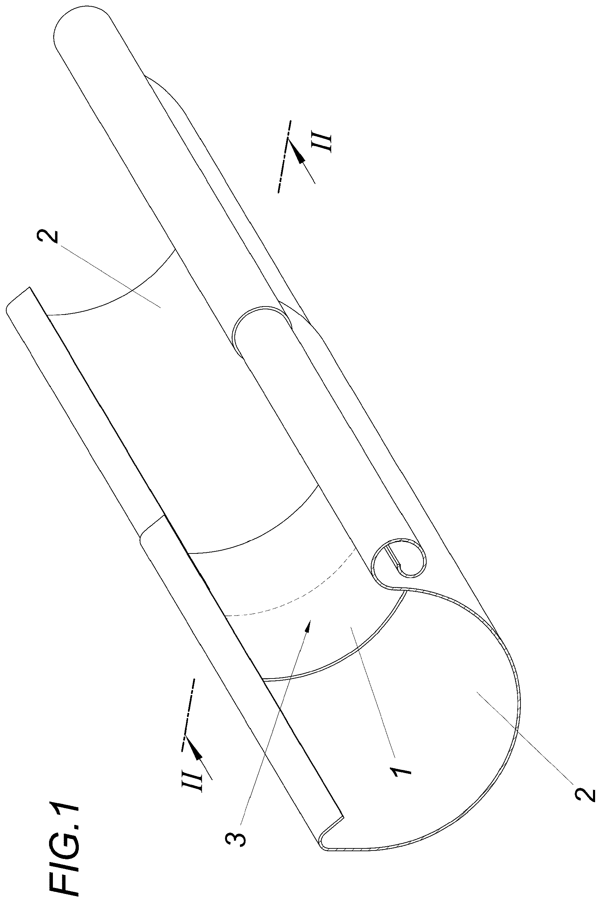

Ein 1 kann, wie dies der Fig 1 zu entnehmen ist, zum Verbinden von Dachrinnenstücken 2 eingesetzt werden, in dem es über den Stoß- bzw. Überlappungsbereich 3 zwischen den Dachrinnenstücken 2 geklebt wird.

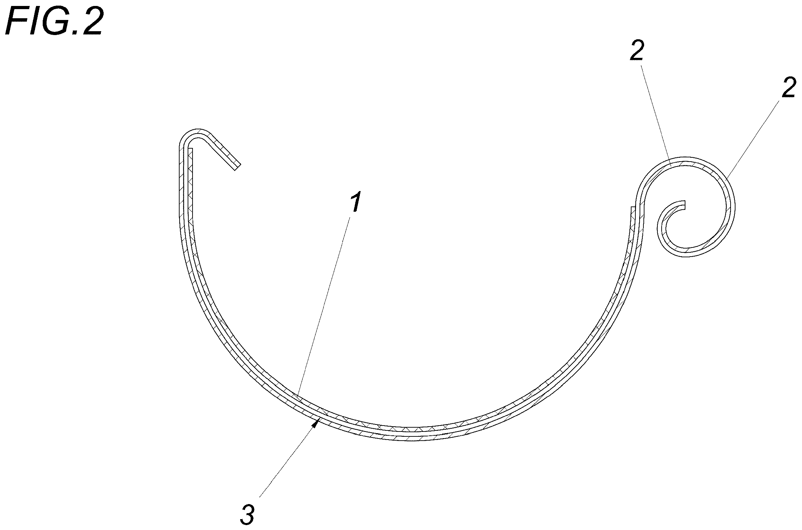

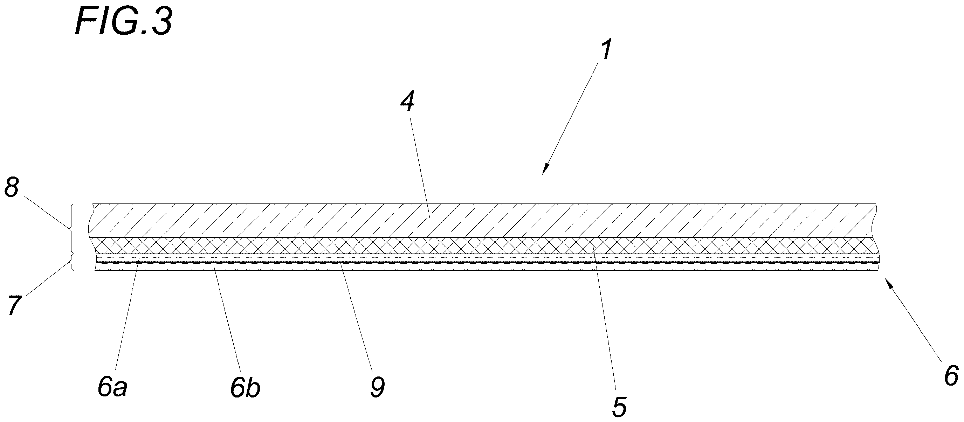

Der Aufbau des Dehnungsausgleichselements 1 ist der Fig. 3 zu entnehmen, wonach dieses wenigstens drei Schichten 4,5,6 umfasst, einen dachrinnenabgewandten Basisstreifen 4 aus EPDM-Kautschuk, eine Zwischenschicht 5 aus Butylkautschuk und eine dachrinnenzugewandten Klebeschicht 6. Die Klebeschicht 6 ist dabei vollflächig auf dem Dehnungsausgleichselement 1, das heißt vollflächig unter Zwischenlagen der Zwischenschicht 5 auf dem Basisstreifen 4, ausgebildet, sodass das Dehnungsausgleichselement 1 dachrinnenzugewandt im Wesentlichen keine klebeschichtfreien Flächen aufweist. Auf diese Weise besteht an jeder Stelle des Stoß- bzw. Überlappungsbereichs 3 Kontakt zwischen dem Dehnungsausgleichselement 1 und den Dachrinnenstücken 2, wodurch deren Stoß- bzw. Überlappungsbereichs 3 vom Dehnungsausgleichselement 1, insbesondere von der Klebeschicht 6 versiegelt wird (Fig.2). Trotz vollständiger Versiegelung kann eine Längsausdehnung der Dachrinnenstücke 2 kompensiert werden, da sich die Klebeschicht 6 ab einer bestimmten Längsausdehnung vom Butylkautschuk ablösen- bzw. abschälen kann, ohne dabei den Basisstreifen 4 und die Zwischenschicht 5 zu beschädigen.

Die Zwischenschicht 5 aus Butylkautschuk kann auf den Basisstreifen 4 aufvulkanisiert sein. Insbesondere kann der Butylkautschuk vollflächig auf den Basisstreifen 4 aufvulkanisiert sein. Die Klebschicht 6 kann wiederum vollflächig auf der Zwischenschicht 5 aus Butylkautschuk angeordnet sein, sodass die Klebeschicht 6 vollflächig unter Zwischenlage einer Zwischenschicht 5 aus Butylkautschuk auf einer Seite des Basisstreifens 4 angeordnet ist. Vollflächig heißt in diesem Zusammenhang, dass das Dehnungsausgleichselement 1 im Wesentlichen keine klebeschichtfreien Stellen aufweist, wobei randseitige klebeschichtfreie Stellen fertigungsbedingt auftreten können. (Fig. 3)

Als geeignete Klebeschicht 6 hat sich Polyacrylatkleber herausgestellt. Insbesondere eine Zusammensetzung aus 85 - 90 Gew% Polyacrylat und 10 - 15 Gew% Harze zeigt ein über ein Temperaturspektrum von -20°C bis 80°C weitgehend elastisches Verhalten mit ausreichend großer Haftung.

Wie in der Fig. 3 angedeutet, kann die Klebeschicht 6 eine Dicke 7 von 0,7 mm bis 2 mm, insbesondere von 1 mm bis 1,5 mm, aufweisen.

Der Basisstreifen 4 und die Zwischenschicht 5 können gemeinsam eine Dicke 8 von 0,5 mm bis 1,5 mm, insbesondere von 0,8 mm bis 1 mm, aufweisen.

Zur Erhöhung der Stabilität kann die Klebeschicht 6 von einer parallel zur Klebeschicht 6 verlaufenden Strukturschicht 9 in zwei Klebeschichthälften 6a, 6b geteilt sein.

## Patentansprüche

1. Vorrichtung umfassen zwei Dachrinnenstücke (2) und ein Dehnungsausgleichselement (1) zum Verbinden der zwei Dachrinnenstücke mit einem eine Klebeschicht (6) aufweisenden Basisstreifen (4) aus EPDM-Kautschuk, wobei das Dehnungsausgleichselement (1) über einen Stoß- bzw. Überlappungsbereich (3) zwischen den zwei Dachrinnenstücken (2) geklebt ist, **dadurch gekennzeichnet, dass** die Klebeschicht (6) vollflächig unter Zwischenlage einer Zwischenschicht (5) aus Butylkautschuk auf einer Seite des Basisstreifens (4) angeordnet ist.

2. Vorrichtung nach Anspruch 1, **dadurch gekennzeichnet, dass** der Butylkautschuk auf den Basisstreifen (4) aus EPDM-Kautschuk aufvulkanisiert ist.

3. Vorrichtung nach Anspruch 1 oder 2, **dadurch gekennzeichnet, dass** die Klebeschicht (6) ein auf den Butylkautschuk angeordneter Polyacrylatkleber ist.

4. Vorrichtung nach Anspruch 3, **dadurch gekennzeichnet, dass** der Polyacrylatkleber 85 - 90 Gew% Polyacrylat und 10 - 15 Gew% Harze umfasst.

5. Vorrichtung nach einem der Ansprüche 1 bis 4, **dadurch gekennzeichnet, dass** die Klebeschicht (6) eine Dicke (7) von 0,7 mm bis 2 mm, insbesondere von 1 mm bis 1,5 mm, aufweist.

6. Vorrichtung nach einem der Ansprüche 1 bis 5, **dadurch gekennzeichnet, dass** der Basisstreifen (4) und die Zwischenschicht (5) gemeinsam eine Dicke (8) von 0,5 mm bis 1,5 mm, insbesondere von 0,8 mm bis 1 mm, aufweisen.

7. Vorrichtung nach einem der Ansprüche 1 bis 6, **dadurch gekennzeichnet, dass** die Klebeschicht (6) von einer parallel zur Klebeschicht (6) verlaufenden Strukturschicht (9) in zwei Klebeschichthälften (6a,6b) geteilt ist.

8. Verfahren zum Verbinden und Abdichten stoßseitig bzw. überlappend miteinander verbundener Dachrinnenstücke (2), wobei ein Dehnungsausgleichselement (1), umfassend einen eine Klebeschicht (6) aufweisenden Basisstreifen (4) aus EPDM-Kautschuk, über den Stoß- bzw. Überlappungsbereich (3) zwischen zwei Dachrinnenstücken (2) geklebt wird, **dadurch gekennzeichnet, dass** die Klebeschicht (6) vollflächig unter Zwischenlage einer Zwischenschicht (5) aus Butylkautschuk auf einer Seite des Basisstreifens (4) angeordnet ist.

9. Verwendung eines Dehnungsausgleichselements (1) mit einem eine Klebeschicht (6) aufweisenden Basisstreifen (4) aus EPDM-Kautschuk, wobei die Klebeschicht (6) vollflächig unter Zwischenlage einer Zwischenschicht (5) aus Butylkautschuk auf einer Seite des Basisstreifens (4) angeordnet ist, zum Verbinden und Abdichten stoßseitig bzw. überlappend miteinander verbundener Dachrinnenstücke (2).

## Claims

1. Device comprising two gutter pieces (2) and an expansion compensating element (1) for connecting the two gutter pieces (2), with a base strip (4) made of EPDM rubber and having an adhesive layer (6), wherein the expansion compensating element (1) is affixed over a joint or overlap region (3) between the two gutter pieces (2), **characterised in that** the adhesive layer (6) is arranged over the entire surface on one side of the base strip (4) with the interposition of an intermediate layer (5) made of butyl rubber.

2. Device according to claim 1, **characterised in that** the butyl rubber is vulcanised onto the base strip (4) made of EPDM rubber.

3. Device according to claim 1 or 2, **characterised in that** the adhesive layer (6) is a polyacrylate adhesive applied to the butyl rubber.

4. Device according to claim 3, **characterised in that** the polyacrylate adhesive comprises 85-90% by weight of polyacrylate and 10-15% by weight of resins.

5. Device according to one of claims 1 to 4, **characterised in that** the adhesive layer (6) has a thickness (7) of 0.7 mm to 2 mm, in particular of 1 mm to 1.5 mm.

6. Device according to one of claims 1 to 5, **characterised in that** the base strip (4) and the intermediate layer (5) together have a thickness (8) of 0.5 mm to 1.5 mm, in particular of 0.8 mm to 1 mm.

7. Device according to one of claims 1 to 6, **characterised in that** the adhesive layer (6) is divided into two adhesive layer halves (6a, 6b) by a structural layer (9) running parallel to the adhesive layer (6).

8. Method for connecting and sealing gutter pieces (2) which are connected to one another on the joint side or in an overlapping manner, wherein an expansion compensating element (1), comprising a base strip (4) made of EPDM rubber and having an adhesive layer (6), is affixed over the joint or overlapping region (3) between two gutter pieces (2), **characterised in that** the adhesive layer (6) is arranged over the entire surface on one side of the base strip (4) with the interposition of an intermediate layer (5) made of butyl rubber.

9. Use of an expansion compensating element (1) with a base strip (4) made of EPDM rubber having an adhesive layer (6), wherein the adhesive layer (6) is arranged over the entire surface on one side of the base strip (4) with the interposition of an intermediate layer (5) made of butyl rubber, for connecting and sealing gutter pieces (2) which are connected to one another on the joint side or in an overlapping manner.

## Revendications

1. Dispositif comprenant deux parties de gouttière (2) et un élément de compensation de dilatation (1) pour relier les deux parties de gouttière à une bande de base (4) en caoutchouc EPDM présentant une couche adhésive (6), dans lequel l'élément de compensation de dilatation (1) est collé sur une région d'about ou de chevauchement (3) entre les deux parties de gouttière (2), **caractérisé en ce que** la couche adhésive (6) est disposée sur la totalité de la surface avec interposition d'une couche intermédiaire (5) en caoutchouc butyle d'un côté de la bande de base (4).

2. Dispositif selon la revendication 1, **caractérisé en ce que** le caoutchouc butyle est vulcanisé sur la bande de base (4) en caoutchouc EPDM.

3. Dispositif selon la revendication 1 ou 2, **caractérisé en ce que** la couche adhésive (6) est une colle polyacrylate disposée sur le caoutchouc butyle.

4. Dispositif selon la revendication 3, **caractérisé en ce que** la colle polyacrylate contient de 85 % en poids à 90 % en poids de polyacrylate et de 10 % en poids à 15 % en poids de résines.

5. Dispositif selon l'une quelconque des revendications 1 à 4, **caractérisé en ce que** la couche adhésive (6) présente une épaisseur (7) comprise entre 0,7 mm et 2 mm, en particulier entre 1 mm et 1,5 mm.

6. Dispositif selon l'une quelconque des revendications 1 à 5, **caractérisé en ce que** la bande de base (4) et la couche intermédiaire (5) présentent ensemble une épaisseur (8) comprise entre 0,5 mm et 1,5 mm, en particulier entre 0,8 mm et 1 mm.

7. Dispositif selon l'une quelconque des revendications 1 à 6, **caractérisé en ce que** la couche adhésive (6) est divisée en deux semi-couches adhésives (6a, 6b) par une couche structurelle (9) qui s'étend parallèlement à la couche adhésive (6).

8. Procédé pour relier et étanchéifier des parties de gouttière (2) reliées entre elles bout à bout ou avec chevauchement, dans lequel un élément de compensation de dilatation (1), comprenant une bande de base (4) en caoutchouc EPDM présentant une couche adhésive (6), est collé sur la région d'about ou de chevauchement (3) entre les deux parties de gouttière (2), **caractérisé en ce que** la couche adhésive (6) est disposée sur la totalité de la surface avec interposition d'une couche intermédiaire (5) en caoutchouc butyle d'un côté de la bande de base (4).

9. Utilisation d'un élément de compensation de dilatation (1) avec une bande de base (4) en caoutchouc EPDM présentant une couche adhésive (6), dans laquelle la couche adhésive (6) est disposée sur la totalité de la surface avec interposition d'une couche intermédiaire (S) en caoutchouc butyle sur un côté de la bande de base (4) de manière à relier et à étanchéifier des parties de gouttière (2) reliées entre elles bout à bout ou avec chevauchement.
